(19) Europäisches Patentamt
European Patent Office
Office européen des brevets

(11) EP 4 071 353 A1

(12) EUROPEAN PATENT APPLICATION

(43) Date of publication:
12.10.2022 Bulletin 2022/41

(21) Application number: 21166918.9

(22) Date of filing: 06.04.2021

(51) International Patent Classification (IPC):
F03D 9/11 (2016.01)      B64C 39/02 (2006.01)
F03D 9/32 (2016.01)

(52) Cooperative Patent Classification (CPC):
F03D 9/11; B64C 39/022; B64D 31/06; B64F 3/00;
F03D 9/32; B64C 2201/042; B64C 2201/14;
B64C 2201/162; B64D 15/12; B64D 41/007;
F05B 2240/921; F05B 2270/11; F05B 2270/32;
F05B 2270/321

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Kitemill AS
5704 Voss (NO)

(72) Inventors:
• Tveide, Tallak
5704 Voss (NO)
• Carnel, Lode
5704 Voss (NO)
• Svenkerud, Christer
5704 Voss (NO)

(74) Representative: Plougmann Vingtoft a/s
Strandvejen 70
2900 Hellerup (DK)

Remarks:
Claim 16 to 22..... is deemed to be abandoned due
to non-payment of the claims fee (Rule 45(3) EPC).

(54) A METHOD AND APPARATUS TO COUNTERACTS SLOWDOWN IN AIRBORNE WIND ENERGY

(57) The present invention relates to tethered aircraft system for counter acting the effects of gravitational forces and a method for optimizing energy harvesting from a tethered aircraft system. The tethered aircraft comprising a ground-positioned motorised winch, an aircraft preferably having one or more trust components, a tetherconnected at one end to the aircraft and distal thereto connected to said winch, and a generator connected to the winch so that a pull in the tether drives the generator to produce electrical energy, wherein the one or more trust components are configured to instill kinetic energy into the aircraft.

Thrust > nominal path thrust

Thrust < nominal path thrust

Thrust > nominal path thrust

Thrust < nominal path thrust

Thrust > nominal path thrust

Thrust < nominal path thrust

Fig. 10

EP 4 071 353 A1

## Description

FIELD OF THE INVENTION

The present invention relates to tethered aircraft system for counter acting the effects of gravitational forces and a method for optimizing energy harvesting from a tethered aircraft system. The tethered aircraft comprising a ground-positioned motorised winch, an aircraft preferably having one or more trust components, a tetherconnected at one end to the aircraft and distal thereto connected to said winch, and a generator connected to the winch so that a pull in the tether drives the generator to produce electrical energy, wherein the one or more trust components are configured to instill kinetic energy into the aircraft.

BACKGROUND OF THE INVENTION

Airborne Wind Energy (AWE) systems propose an alternative to traditional horizontal axis wind turbines (HAWT). AWE foregoes the tower of the HAWT, rather using a tethered aircraft (the kite). Energy is extracted either by reeling out the tether under tension (lift mode) or by utilising an additional drag force on the kite itself (drag mode). A combination of the two is also possible in theory (lift-drag mode). Depending on the structure chosen, energy must be transmitted from the kite to the ground using either the tensile force of the tether(s) or electricity through conductive wires of the tether. Such a windmill may harvest stronger winds at higher altitudes compared to HAWT windmills, and/or require fewer resources to be build, and/or benefit from a range of benefits due to being a different class of windmill design.

It has been suggested that more energy can be harvested by the kite flying in a crosswind pattern such as a circular pattern or a figure eight pattern. While this appears to be a promising flying strategy, such crosswind flying patterns results in that altitude of the kite repeatable goes up and down relatively to the orientation of gravity. During a downward movement, the kite accelerates by its mass (gravity) and by the wind speed. During an upward movement, the kite decelerates due to the mass and the flying against the wind direction. Such accelerations and decelerations may pose issues as to flying dynamics of the kite (e.g. lift and drag generated is proportional to the actual flying speed squared) and issues can be inherited into the energy production.

AWE Apparatus may be single kite or multi kite designs, where in the latter case several kites are connected using tether or other arrangements. Multi kite AWE may be lesser affected by gravity as some wings will be moving upwards at the same time as some are moving downwards.

AWE apparatus may be coarsely divided into two classes, lift mode and drag mode.

*Lift mode AWE* apparatus comprises a winch with a generator on the ground, a tether and a kite. The generator is mechanically coupled to the winch in such a manner that reeling out results in a rotation of the generator thereby producing an electrical current. In the production phase, the kite generates pull while moving mostly crosswind for best effect. The kite will typically fly in a cyclic movement, performing several cycles before initiating the return phase. The energy is produced at the winch by the generator, as resists the kite pull while reeling out the tether. During the return phase, the kite produces little pull and the winch reels in. Some designs could combine the production and return phase into a single cycle. The kite will fly in a pattern optimised for energy production, typically something resembling either a circle or a lying figure of eight.

*Drag mode AWE* apparatus comprises a tether attached to the ground which is typically conductive (torque transferring variations exist, but are less useful for single kite AWE). The kite will fly a cyclic pattern mostly crosswind, typically at a mostly fixed tether length. To generate energy, turbines mechanically coupled to drive on-board electrical generators are placed on the kite. Such turbines can conceptually be considered as applying a negative thrust in the kite's drag direction. The negative thrust of the turbines produce energy via the generators which energy may be transferred to the ground through the conductive tether. The flying pattern may also in this case resemble a circle or a lying figure of eight.

Recent developments in lowering the energy cost of wind power has been focused on increasingly larger units, including increasingly larger kites. It may be assumed, that the lowest cost for AWE will also appear at larger scale. Somewhat simplified, the power (lift) of a wing increases by the area of the wing (wingspan scale squared) while the mass of a scaled wing and tether will scale with wingspan scale to the power of three. There are reasons to believe that such a mass estimate is too high, but still one may assume that mass will scale faster than wing lifting power with scale. Based on this, one might expect the maximum scale of an AWE apparatus to be limited by the airborne mass, of both kite and tether.

A second critical scaling limitation is assumed to be the tether. The tether gives tensile strength and energy transfer between the kite and the ground. The tether adds aerodynamic drag and a higher airborne mass to the design of the apparatus. It can be argued that the mass scaling or the tether will be less than mass scaling of the wing. For a wing, the mass scaling can, at present be estimated as scaling with the power of three whereas the cross section and the mass of the tether scale with the power of two. However, the area of the tether exposed to wind scales only with the diameter of the tether. For lift mode AWE, the tether is the means to transfer energy from the airborne part of the AWE apparatus to the ground. It is assumed that using this energy transfer capacity to its maximum extent is beneficial. If the tether is conductive, the power transfer capacity will be limited by the electrical and weight limitations of the tether. One can't assume that any amount of power may flow in both directions during production.

OBJECT OF THE INVENTION

The invention aims at counter acting gravity induced speed change and indirectly reduce speed variations of the kite during production.

SUMMARY OF THE INVENTION

The present invention relates in a first aspect to a method for optimizing energy harvesting from a tethered aircraft system, the tethered aircraft comprising a ground-positioned motorised winch (1), an aircraft (2) having one or more trust components, a tether (6) connected at one end to the aircraft and distal thereto connected to said winch (1), and a generator (9) connected to the winch (1) so that a pull in the tether drives the generator (9) to produce electrical energy, wherein the one or more trust components are configured to instil kinetic energy into the aircraft, the method comprising:

- determining a nominal flying path for the aircraft (2), said nominal flying path being defined in zero gravity conditions and includes one or more of the following elements:

  • the flying path in space
  • the speed of the kite along the path
  • the negative thrust applied for power harvesting
  • the speed of winch reeling
  • the lift coefficient of the kite
  • orientation of the kite relative to gravity
  • wind speed and optionally wind gradient, preferably representing an atmospheric boundary layer
  • wind direction

- determining, if present, deviations from the nominal path and instil kinetic energy into the tethered aircraft in an amount sufficient to counter act the deviations due to gravity by use of one or more of the one or more thrust components.

The invention aims at flying the kite so as to follow a nominal path. This path includes vertical motions up and down relatively to gravity.

• Going up results in velocity slow-down which is counter acted to maintain the nominal path speed

• Going down results in velocity speed-up which is counter acted to maintain the nominal path speed.

"The nominal flying path" is preferably used to reference one or more, such as all, of the following parameters in zero gravity conditions:

• the kite's flying path in space (X,Y,Z coordinate)
• the speed of the kite along the kite's flying path, typically evaluated as ds/dt where "s" is the distance travelled along the path and "t" is the time. Thus, ds/dt references the speed
• negative trust applied for power harvesting, e.g. by use of a turbine mechanically coupled to a generator
• speed of the winch reeling; In zero gravity the reel-out is positive
• the lift and/or drag coefficient of the kite and tether

"Zero gravity conditions" is used to reference a hypothetical scenario in which the effect of gravity on the flying of the kite is not present or neglected.

"Reverse pumping" is preferably used to reference a process during which a pull is provided in the tether in an amount which increases the speed of the kite. Thus, "reverse" is not as such used to reference the opposite of "pumping". Thus, such a pull in the tether results in that the flying speed of the kite increases and such an increase in flying speed results in an increased lift on the kite. The increase in lift results in that the altitude of the kite increases. Thus, reverse pumping may be described as inducing kinetic energy into the kite (increase in flight speed) which is converted into potential energy (increase in altitude). Opposite to provide a pull in the tether and reeling-in, is to slack the tether and reel-out. This will decrease the flying speed of the kite. Further, reverse pumping is preferably invoked by changing the reeling speed of the ground winch relative to the nominal path in such a way to increase or decrease the flying speed of the kite. Reeling out slower will increase the flying speed and vice versa.

"Gravity induced speed change" is used to describe the effect of gravity to cause the kite to slow down or speed up.

"Lift" is used in an ordinary manner to reference the lift force of lift coefficient produced by a kite moving through a mass of air or being exposed to a flowing mass of air.

"Thrust" is, inter alia, used in the ordinary manner as referring to a force that moves a kite through the air. However, in the context of the present invention, thrust is preferably considered to be negative or positive. In that context, power harvesting by inter acting with the mass of air surrounding the kite may be referred to as negative thrust whereas a force that moves the kite through the air may be referred to as positive thrust. Negative thrust is different from drag in the sense that the energy is harvested by the kite rather than wasted to the surroundings.

"Power harvesting" is preferably used to reference devices on-board the kite for e.g. charging of avionics and VTOL (vertical take-off and landing) batteries. Such devices may a comprise turbine, typically coupled to a generator, but may also comprise solar cells.

"RAT" as used herein is preferably used to reference a device generating a negative thrust, such as a Ram Air Turbine.

*"Trust component"* is preferably used to reference one of the following:

- Propeller
- RAM (Ram Air Turbine)
- Reverse pumping
- Control surface(s) adapted to change the lift coefficient of the aircraft
- Control surface(s) adapted to change the angle of attack for the aircraft
- A winch to which the tether is connected, whereby the winch can be used to provide a pull in the kite creating a trust component.

The description presents preferred embodiments and aspects of the invention, and is not to be construed as limiting to the scope of this invention. The invention is envisaged as possible to apply to most or even all AWE subject to gravity, and in particular to drag mode AWE. In particular, many AWE concepts will not use return phases, and some will incorporate production and return phase into a single cycle. Also, AWE systems may have several ground attachment points.

BRIEF DESCRIPTION OF THE FIGURES

The present invention and in particular preferred embodiments thereof will now be described in more detail with regard to the accompanying figures. The figures show ways of implementing the present invention and are not to be construed as being limiting to other possible embodiments falling within the scope of the attached claim set.

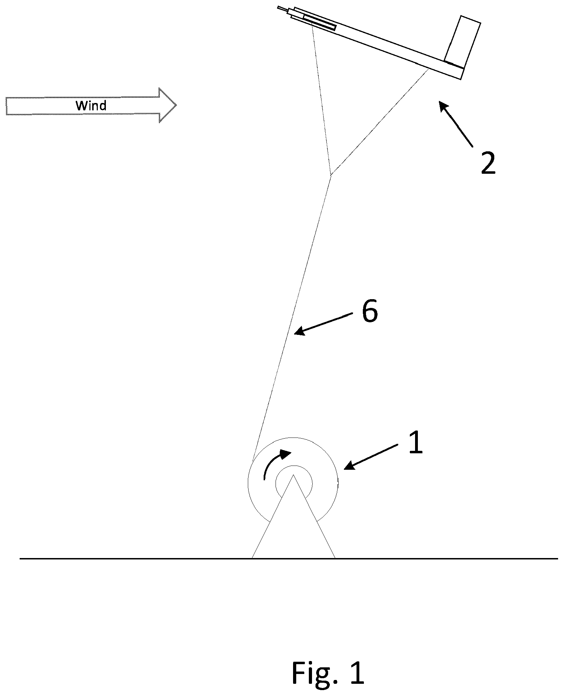

Figure 1 schematically illustrates a tethered aircraft system according to the present invention;

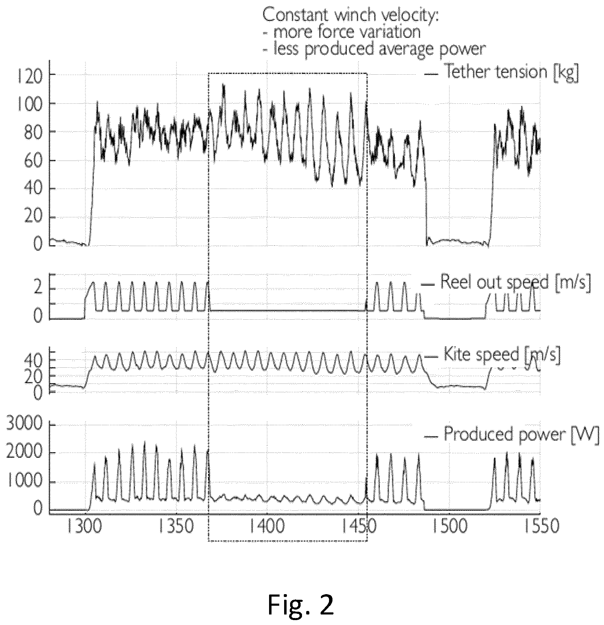

Figure 2 shows experimental results using reverse pumping during AWE production; it can be seen that using reverse pumping (faster winch reel-out during down stroke and slower during the up stroke) during AWE production has the positive effects of: decreasing the variance of tether tensile load, increasing the average power output of the system and decreasing the variance in kite flying speed. In figure 2, a down stroke can be identified as a maximum speed of the kite is a bottom of a cycle, and a minimum speed is the top of a cycle. In figure 2, time point 1450 is a local minimum of the speed which is occurring at the top of the cycle;

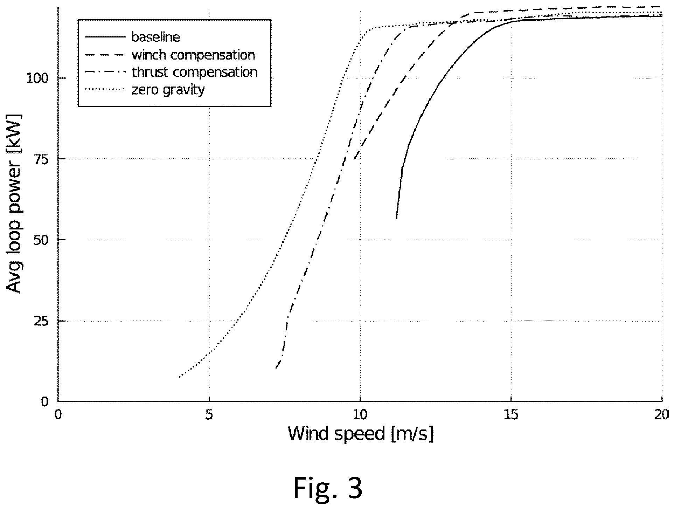

Figure 3 shows simulated results comparing reverse pumping (green) and thrust control (pink) to baseline power curves for normal (red) and zero gravity (blue). Figure 3 shows in details simulated results comparing reverse pumping (green) and thrust control (pink) to baseline power curves for normal (red) and zero gravity (blue). It is seen that the thrust enabled AWE plant resembles the zero gravity baseline, except having substantially constant power losses due to weight of thrust component (such as propellers, controller, motors) at all wind speeds. These losses are due to weight of the thrust components, such as propellers, controllers and motors. Reverse pumping works better at low wind speeds due to the relatively smaller losses in the winch compared to thrust conversion losses. Even so, reverse pumping does not work as well in higher wind speeds when overpowered conditions occur. Conversion losses are typically losses in energy-storage-energy; for a winch there are some small losses in the motor, gearbox, battery heat, electronics losses etc. and for a RAT, the losses are probably a lot greater because getting forces from a propeller will generate a lot of drag which is lost. As shown, the most energy is produced in the zero gravity scenario. With reference to preferred embodiments of the invention presented herein, the flight path of such a zero gravity scenario is referred to as the nominal flight path. One way of describing preferred embodiments of the invention is adapt the kite to fly in a nominal flight path and this involves counter-acting the effects of gravity.

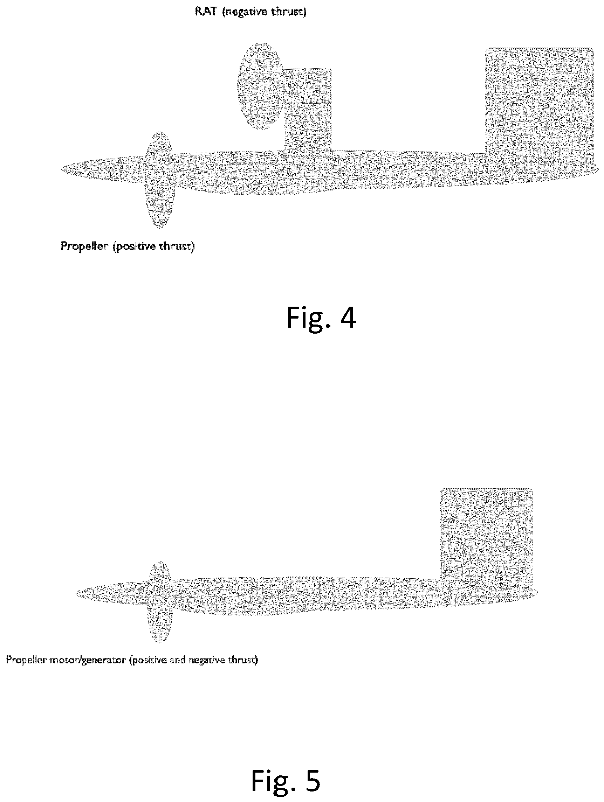

Figure 4 schematically illustrates an embodiment of a kite for direct thrust control without a conducting tether featuring a RAT for negative thrust (power generation) and a motor and propeller for positive thrust (power consumption).

Figure 5 schematically illustrates an embodiment in which the generator and propulsion components may be combined into a single unit.

Figure 6 schematically illustrates an embodiment in which positive thrust is applied when moving upwards to counteract the forces of gravity and negative thrust is applied when moving downwards.

Figure 7 schematically illustrates an embodiment in which no positive thrust is applied during upwards movement e.g. due to actuator limitations - the onboard RAT can only produce negative thrust. The harvested power is used for utility purposes such as actuator power or de-icing, or wasted.

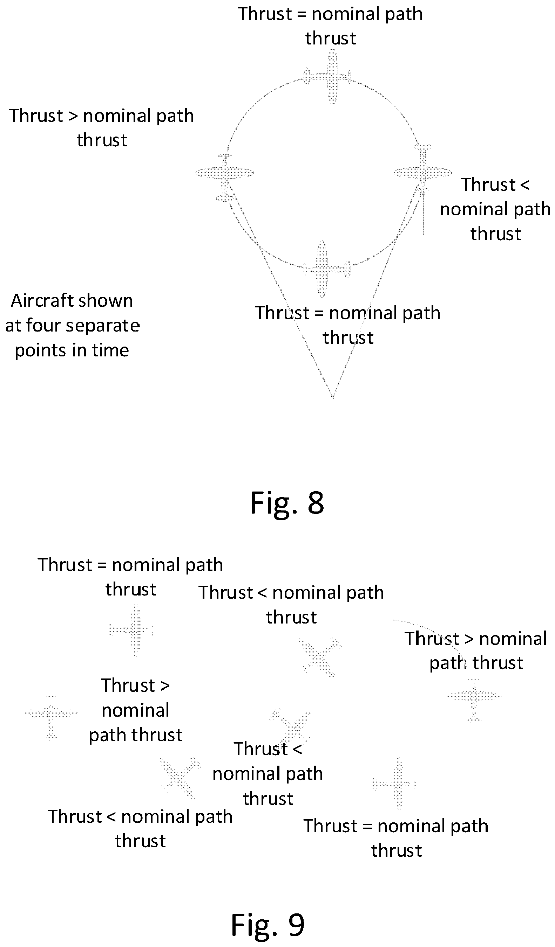

Figure 8 schematically illustrates an embodiment of the invention for drag mode AWE. The thrust is varied according to gravitational power along the nominal path. The thrust applied at any time is a superposition of thrust to counteract gravity and the (negative) thrust used to harvest energy. Depending on the relative amount of thrust necessary to achieve this, the thrust may always be net negative during the cycle.

Figure 9 schematically illustrates an embodiment of the invention with a non-circular flying pattern. The geometric shape of the flight path of the kite is of lesser importance. The figure shows six separate points in time for a single kite.

Figure 10 schematically illustrates an embodiment of the invention shown where there are two kites connected to a single tether. The figure shows three separate points in time for two kites connected by means of a tether.

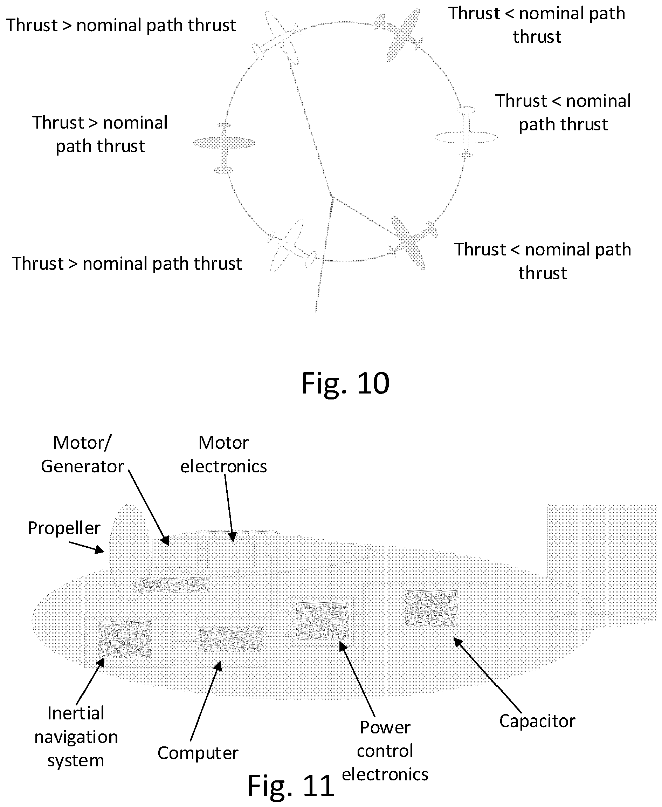

Figure 11 schematically illustrates an embodiment featuring a motor/generator with a propeller/turbine on the shaft, a motor electronics circuit controlling the amount of thrust applied on the propeller/turbine, power control electronics managing the state of charge of the energy storage, such as a capacitor energy storage and/or electrical battery, and converting the power to a suitable voltage level. The computer receives information about the vertical speed of the kite relative to ground, to calculate the effect of gravity. This information is used to calculate a substantially opposite power to be applied at the propeller/turbine. Note that the capacitor (onboard energy storage) is optional if the tether is conductive. The motor/generator may have other uses such as launch and landing support or limiting the flying speed in the return phase.

DETAILED DESCRIPTION OF PREFERRED EMBODIMENTS

As the wind is flowing mostly horizontally, the kite should preferably fly in a pattern substantially in a vertical plane (crosswind flight) in order to extract the energy best. The flying pattern may be cyclic for production. In some embodiments, a number of sequential cyclic production phase is interrupted by a return phase where the power plant must consume energy. A production cycle is referred to as either a single cycle, or a sequence of such cycles and the return phase.

In accordance with the description herein, the invention may be disclosed with reference to the feature "nominal path". Nominal path may preferably be defined as comprising one or more of the following elements:

• the flying path in space
• the speed of the kite along the path
• the negative thrust applied for power harvesting
• the speed of winch reeling
• the lift coefficient of the kite

The nominal path is chosen to extract a high amount of energy from a complete production and return cycle. The nominal path will, as per definition, not depend on gravitational effects. Rather it will depend on the wind profile, the geometry of the flight path and physical limitations of the equipment. It is assumed that the speed of the kite (ds/dt) along the nominal path is substantially constant, depending mostly on cosine losses and the direction of the flight path relative to the wind direction. Cosine losses as used herein is typically used to refer to the situation that the kite is not perpendicular to the incoming wind. That situation is not feasible as this would, in essence, mean for a horizontal wind that the kite is in the ground. Accordingly, the kite is placed at an angle above the ground. The angle can in essence not be 90 degrees as this would mean in essence no power. Therefore, is it an aim to keep it as low as possible but still safe. That is referred to as cosine losses as "cosine(inclination angle)" goes directly into the power equation. The winch reeling speed will be zero for traditional drag mode AWE. For traditional lift mode AWE, the winch reel out speed is close to an effective reeling out at a speed of a third of the wind speed projected in the downwind direction. The nominal path is preferably to be substantially located in plane having an angle to vertical, downwind relative to the tether attachment point.

In real flying conditions, where gravity is present, and the kite is flying along the nominal path the kite is subjected to gravitational forces with substantial impact on the speed along the path. If the kite is slowed down relative to the nominal path by gravity, less power will be harvested from the wind. Herein, "gravity induced speed change" is used to describe the effect of gravity to cause the kite to slow down or speed up in a way so that the kite is no longer following the nominal path.

In light wind conditions, gravity induced speed change adds to the problem of keeping the kite airborne. This in turn increases the cut-in wind speed necessary for operation of the power plant, relative to a kite flying at substantially constant speed. This is shown in figure 2. The cut-in wind speed of the uncompensated system is at approximately 10 m/s while the cut-in wind speed of the compensated systems compensated as disclosed herein is only around 6-7 m/s. This difference is expected to increase with scale.

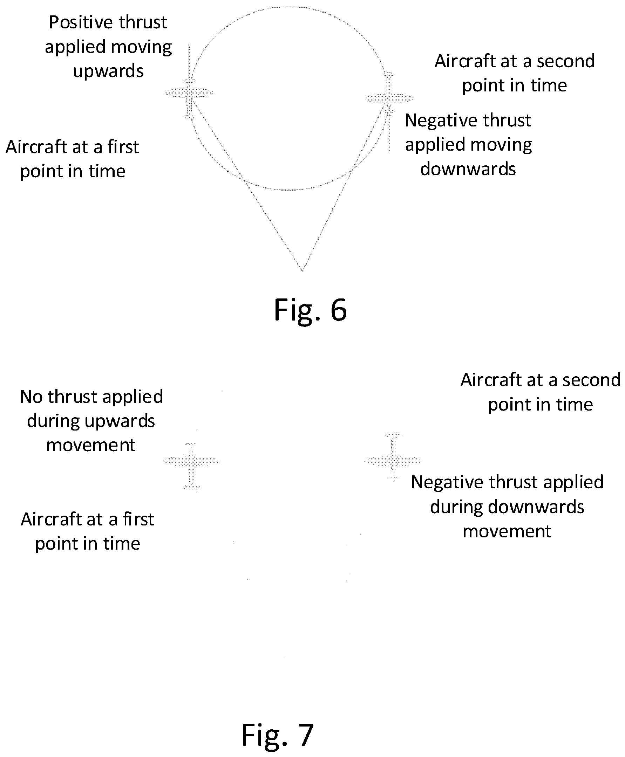

If the kite is travelling faster relative to the nominal path, it should be depowered by reducing lift and/or adding drag to slow it down to allow it to obtain the speed according to the nominal path. Such a high speed may be affected by the kite flying in a flight direction component toward the ground (see also figs. 6 and 7).

The reason why the kite should slow down may be one or more of the following:

• to protect the structural integrity of the kite
• to protect the structural integrity of the tether
• to protect the power electronics from high currents, high power, high temperatures etc.
• to protect the tether from high current and/or temperature
• to protect the winch from high torque, power or temperature

A kite flying in a flight direction having component away from the ground needs to counter act gravity to gain altitude. If no counter measures are taken, the kite will slow down. Being slowed down by gravity typically leads to less power being harvested from the surrounding wind. If the kite should be slowed down intentionally, this also causes less power to be harvested from the surrounding wind.

The invention aims to use a one or more of six measures to counteract gravity induced speed changes thereby indirectly reduce speed variation(s) of the kite during production.

The reduction of speed variation can be described in term of "instil" kinetic energy into the kite". Within the concept of instil kinetic energy is considered that the kinetic energy can be increased or decreased. That is, instil can also refer to removal kinetic energy since such a removal is instil with opposite sign.

In the present context, kinetic energy is preferably determined as $E_k=0.5*m*v^2$ were m is the flying mass. The full length of the tether may typically be ignored as flying mass, and typically only the mass of 100-200 m of the tether close to the kite could be taken into consideration and $v=ds/dt$. The flying mass is typically the total mass of the kite which cannot be changed during flight. Thus, an increase or decrease in kinetic energy can be accomplished by changing the velocity, thereby instil kinetic energy into the kite.

The amount of kinetic energy that preferably should be instilled into the kite has been found to be substantially equal to (or at least amount to a substantial portion to) the power performed on the kite by gravitational forces. This may be written as:

$$E_{k,instill} = P = \vec{g} \cdot \vec{v}$$

Instil kinetic energy into the kite may be chosen from:

- additional direct thrust, e.g. using propellers and/or RAT
- by reverse pumping
- changing the lift coefficient of the kite, changing the thrust generated by the surrounding wind

If more than one measure is incorporated, the sum of the instilled kinetic energy should amount to a substantial portion of the power done by gravity when moving along the nominal path.

When using direct thrust e.g. with propellers and/or RAT, the invention suggests in some embodiments adding energy storage on the kite to store energy harvested in the down stroke such that it might later provide thrust in the upstroke. The amount of energy stored in this manner may advantageously be a substantial portion of the change in gravitational potential energy between the kite at its highest point on the nominal path and its lowest point.

It is foreseen that the measures "reverse pumping", "thrust" and "changing lift coefficient" may all be applied at the same time, in any plurality one to three, based on current wind conditions and limitations of the equipment used. It also foreseen that only one or more of the measures are implemented.

In this context, the power (energy during a time window) supplied through the reverse pumping measure is preferably defined to be the change in power transmitted through the tether using tether speed multiplied by tether tension relative to that of the nominal path. Likewise, the power of the changing of lift coefficient is the thrust power difference relative to that of the nominal path. This may symbolically be written as:

$$P_{reverse\ pumping} = T_{tether} * \Delta V_{reel-out}$$

Where $P$ denotes power, $T$ denotes tether tension and $V$ denotes speed.

Using thrust directly has the benefit of keeping the flying speed and tether tension stable, resulting in smooth power production.

Reverse pumping is a method that does not incur large conversion losses by conversion from kinetic energy to potential energy. The change in winch reel-out speed relative to the nominal path represents loss of power production (e.g. reeling out at less than 1/3 wind speed). This energy loss limits the usefulness of reverse pumping while producing energy. There may also be limitations such as tether tensile strength, winch maximum speed, maximum torque, maximum acceleration of the drum or maximum current in the winch motor windings. These may limit the system's capacity for reverse pumping. In low wind speeds, reverse pumping could be preferable to other methods of generating thrust due to the low energy conversion losses. One may even choose to operate at negative net power for a short while to avoid having to land during a lull.

Changing the lift coefficient of the kite may be done for example by changing the angle of attack of the main wing relative to the apparent wind at the kite, or by changing the shape of the wing profile sections. The person having ordinary skill in the art will be able to control the amount of thrust applied by the main wing subject to changing control input from the kite. If the change in lift coefficient leads to an increased glide number of the tether and kite, a component of thrust is added, and consequently subtracted from the kite's thrust if the glide number is reduced. In low wind conditions, the nominal path lift coefficient is assumed to maximise that glide number. In this scenario, only a negative thrust component may be subtracted to the kite through changing the glide number. Missed potentially harvested power may not be recovered. If the nominal path lift coefficient is not conditioned for maximum glide number, in response to being overpowered, both a positive and negative thrust component may be added to counteract gravity during movement along the nominal path. Changing the lift coefficient will normally directly affect the lift on the tether, reducing power output or being subject to limitations of the apparatus. These effects are mostly undesirable.

Gravity induced speed change countermeasures may advantageously be divided into four groups:

1. reverse pumping, with the winch connected to the grid or ground energy storage
2. onboard thrust control, with power dissipated or transmitted to the ground through the tether, then connected to the grid or ground energy storage
3. onboard thrust control, with power stored in an energy storage on the kite
4. changing the lift coefficient
5. changing the geometric size of the nominal flight pattern
6. change the general elevation angle above ground

The combined effect of these four measures could advantageously be substantially opposite to the power applied to the kite by gravity during the production cycles. If measures 1, 2 and 4 are of relatively lesser or no effect, the energy storage in the kite could be a substantial portion of the difference in gravitational potential energy at the highest and lowest point of the nominal path relative to ground. If the nominal path contains a plurality of cycles, the difference in gravitational potential energy may be calculated for one cycle or a plurality of cycles performed in sequence. The amount of energy storage required may have to be increased further to account for conversion losses related to changing from positive to negative thrust. It may even further be increased to account for utility power consumption on the kite (actuators, electronics, de-icing).

An AWE power plant may reconfigure the choice of method to instil energy based on current working conditions. E.g. in low wind conditions prefer reverse pumping, in medium wind conditions prefer direct thrust.

As the means of applying positive and negative thrust, and storing the energy during the nominal path flight, is assumed to be limited, one may opt to reduce the geometric size of the nominal flight pattern to reduce the effect of gravity induced speed change. For a circular flying path, this would translate to reducing the radius of looping. This is a fifth method of countering gravity induced speed change and might simply be accounted for by the kite turbine its control system. Additionally, the flight path may be changed away from circular flying paths to e.g. shorter distance up than down. An advantageous effect of this could be that the wind is stronger the closer the kite stays to the centre of the wind window.

Furthermore, another way of reducing the impact of gravity induced speed change is to increase the general elevation angle above ground, such that the kite is flying less in a vertical plane and more in the horizontal plane. This is a sixth measure of countering gravity induced speed change.

To store energy in the kite, a typical embodiment will implement storage technology such as a flywheel, capacitor or battery. This description should not limit the methods of energy storage, nor the medium to store the energy. As disclosed above, airborne mass may be expected to scale poorly with larger wingspans. The mass of the energy storage is expected to represent an increasing fraction of this mass with increased scale. Even so, the application of the invention will largely neutralise the negative effects of added mass for AWE, allowing larger scale wings to be built.

To generate thrust, a preferred embodiment may comprise a plurality of RATs and propellers. Some of these may be combined into motor-generators producing both positive and negative thrust. A motor-generator refers to a structure which may be operated to produce positive thrust when powered and to produce negative thrust when energy is harvested to run the generator. If the tether is conducting, the invention may be implemented by varying only an amount of negative thrust, overlaid the negative thrust for power production in the nominal path. In this case only a RAT and generator may be necessary to implement the invention. This description though should not limit the methods to implement negative and potentially positive thrust.

In particular, a preferred method of using fans on the wing is described as a method to both increase the lift and provide thrust in combination with the main wing(s) of the kite.

A typical preferred embodiment of the invention could feature a computer to receive vertical speed relative to ground of the kite from an inertial navigation system. The inertial navigation system will combine sensor data such as GPS, gyro and accelerometer data. Various other ways of measuring or estimating the vertical speed is possible, such as just using an accelerometer and gyro by itself, or measuring the distance to the ground by means of LiDAR. Once the vertical component of the kite speed is known, a desired thrust force or thrust power is calculated by the computer program. The thrust is assigned to the thrust actuators by the computer program. This description is not an exhaustive list of possible embodiments, many more are possible to the person having ordinary skill in the art.

The known mass of the kite is *m* and earths gravitational field is *g.* The exact amount of thrust force or power to be applied to counter gravity induced speed change may be calculated using vector calculus using the vector dot product once the speed $\vec{v}$ of the kite is known:

$$F = -m\vec{g} \cdot \frac{\vec{v}}{\|\vec{v}\|}$$

$$P = -m\vec{g} \cdot \vec{v}$$

It is seen that only the angle of $\vec{v}$ relative to vertical needs to be known in order to calculate $F$, thus lessening the required information necessary to implement the algorithm.

Note that an exact compensation of gravity's effect on the kite may not necessary in order for the invention to be useful. In particular if the AWE apparatus has limited capabilities for countering gravity's effect, partially doing so will still reap the described benefits, though to a lesser extent.

As presented herein, a nominal flight path is used. Such a nominal flight path may be determined by use of numerical simulations and such numerical simulations may comprise determining numerically a flight path on the basis of one or more parameters. Often used parameters are:

- the aerodynamic properties of the aircraft, e.g. lift and drag coefficients;
- one or more wind scenarios, such as wind speed and/or wind gradients, such atmospheric boundary layer;
- the forces acting on the aircraft from the tether in combination with the winch, and the reeling-out and/or reeling in of the tether. It is noted that the forces acting on the aircraft from the may be seen as a dependent variable as it is arises inter alia from the aerodynamic properties, the wind and other independent parameters;

During the simulations, the gravity is set to zero. While this may be seen as an active measure taken, it may actually be implemented by not including gravitational and gravitational effects in the simulations. The simulations typically involves a numerical approach to solve equations of motion for the aircraft. Since the nominal path typically involves a desire to optimize one or parameters, the numerical simulations typically comprises iteratively changing the flight path to meet one or more optimization parameters.

Such one or more optimization parameters is/are typically selected from

- power production by the electrical generator,
- speed of airplane,
- altitude of flight,
- and/or space available for flight.

While it may be tempting to focus only on power production in the optimization, a solution obtained based on such a focus may not be feasible since e.g. the speed of the airplane may exceed a speed limit to be imposed to avoid imposing structural damages on the aircraft. Thus, in practical optimization of number of parameters may often need attention to avoid negative effect of optimizing power production. Thus, the nominal flying path may be an optimal or even suboptimal path.

It may be desired to impose a certain flight pattern onto the nominal flight path. This could for instance be the case where limited airspace is available or even restricted, or even due to previous experimentation showing that a particular flying pattern is desirable. In such and other situations, a flight pattern is imposed into numerical simulations and such a flight pattern may be in the shape of:

- a figure eight,
- a circle,
- an elliptic
- an oval, preferably orientated with its most narrow end closest to the ground,

or even combinations thereof. When imposing a shape on the flight pattern the extension may either be fixed or changeable.

Itemized list of preferred embodiments

Item 1 An AWE kite being controlled in speed by reverse pumping of the winch, such that the reverse pumping power substantially cancels the power applied by gravitational forces, superimposed to the nominal path.

Item 2 An AWE kite capable of producing positive and negative thrust, comprising onboard energy storage, applying thrust substantially opposite to vertical gravitational forces during production superimposed to the nominal path, where the energy storage capacity is a substantial portion of the difference in gravitational potential energy for a single production cycle or a series of such.

Item 3 An AWE kite comprising negative thrust capabilities and a conductive tether, applying thrust substantially opposite to vertical gravitational forces during production superimposed to the nominal path.

Item 4 An AWE kite comprising negative and positive thrust capabilities and a conductive tether, applying thrust substantially opposite to vertical gravitational forces during production superimposed to the nominal path.

Item 5 An AWE kite according to any one of items 1-4, where the sum of applied power relative to the nominal path is substantially opposite to the power as applied on the kite by gravitational forces.

Item 6 A kite according to item 5, where some of the harvested energy is used to power the deicing system.

Item 7 A kite according to any one of the preceding items, where the geometric size of the nominal path is reduced to compensate for limitations in the ability to provide thrust compensation.

Item 8 A kite according to any one of the preceding items, where general elevation angle of the nominal path above horizon ground is increased to compensate for limitations in the ability to provide thrust compensation.

List of reference symbols used:

1. Ground-positioned winch
2. Aircraft
3. Activatable propeller
4. Ram Air Turbines
5. Moveable control surface
6. Tether
7. Controller
8. Energy storage
9. Generator
10. Nominal path

**Claims**

1. A method for optimizing energy harvesting from a tethered aircraft system, the tethered aircraft comprising a ground-positioned motorised winch (1), an aircraft (2) preferably having one or more trust components, a tether (6) connected at one end to the aircraft and distal thereto connected to said winch (1), and a generator (9) connected to the winch (1) so that a pull in the tether drives the generator (9) to produce electrical energy, wherein the one or more trust components are configured to instill kinetic energy into the aircraft, the method comprising:

   - determining a nominal flying path for the aircraft (2), said nominal flying path being defined in zero gravity conditions and includes one or more of the following elements:

      • the flying path in space
      • the speed of the kite along the path
      • the negative thrust applied for power harvesting
      • the speed of winch reeling
      • the lift coefficient of the kite
      • orientation of the kite relative to gravity
      • wind speed and optionally wind gradient, preferably representing an atmospheric boundary layer
      • wind direction

   - determining, if present, deviations from the nominal path and instil kinetic energy into the tethered aircraft in an amount sufficient to counter act the deviations due to gravity by use of one or more of the one or more thrust components.

2. A method according to claim 1, wherein the one or more trust components are configured to provide one or more of:

   - additional direct thrust, e.g. using propellers or ram air turbine (RAT),
   - reverse pumping
   - changing the lift coefficient of the kite, changing the thrust generated by the surrounding wind
   - reducing the geometric size of the nominal flight path
   - increasing the general elevation angle above ground, such that the kite is flying less in a vertical plane and more in the horizontal plane.

3. A method according to claim 2, the method comprises:

   • determining a nominal flight path,
   • apply one or more of the said thrust component to counter act said deviations.

4. A method according to claim 2 or 3, wherein

   - the aircraft (2) further comprising an inertial navigation system
   - the tethered aircraft system further comprising a control system such as a computer adapted to receive a vertical speed relative to ground of the kite from said inertial navigation system and is further adapted to determining thrust force or thrust power sufficient to counter act said deviations instructing the thrust component(s) of the aircraft to produce the determined thrust force or thrust power.

5. A method according to claim 4, wherein the inertial navigation system combines sensor data such as GPS, gyro and accelerometer data of corresponding sensors on the aircraft to determine the vertical speed.

6. A method according to claim 4 or 5, where the control system is ground based or arranged in the aircraft (2).

7. A method according to any of the preceding claims, wherein the nominal flight path is determined by use of numerical simulations comprising determining numerically a flight path on the basis of:

   • the aerodynamic properties of the aircraft;

• one or more wind scenarios;
• the forces acting on the aircraft from the tether in combination with the winch, and the reeling-out and/or reeling in of the tether;

where the gravity is set to zero, the numerical simulations comprising iteratively changing the flight path to meet one or more optimization parameters.

8. A method according to claim 7, wherein one or more optimization parameters is selected from

• power production by the electrical generator,
• speed of airplane,
• altitude of flight,
• space available for flight, and/or
• wind speed distribution with altitude, e.g. provided by lidar.

9. A method according to claim 7 or 8, wherein a flight pattern is imposed into numerical simulations, such as a flight pattern in the shape of:

• a figure eight,
• a circle,
• an elliptic
• an oval, preferably orientated with its most narrow end closest to the ground, and/or
• combinations thereof.

10. A tethered aircraft system for counter acting the effects of the gravitational forces, comprising a ground-positioned motorised winch (1), an aircraft (2) having one or more trust components for counter acting the effect of the gravitational forces, a tether (6) connected at one end to the aircraft and distal thereto connected to said winch (1), and a generator (9) connected to the winch (1) so that a pull in the tether drives the generator (9) to produce electrical energy, and a controller (7) adapted to control the thrust component(s) to counter acting the effect (s) of gravitational forces acting on the aircraft (2).

11. A system according to claim 10, wherein the controller (7) activates reverse pumping to counter act the effects of gravity, by changing the reel-out speed of the winch (1) by decreasing the reel-out speed of the winch (1), wherein a decrease in reel-out speed is used to reduce the gravitational effect if the reel-out speed is bigger than an percentage of the wind speed.

12. A system according to claim 11, wherein the percentage of the wind speed is one third.

13. A system according to any of the preceding claims 10-12, wherein the tether (6) is non-conductive or conductive.

14. A system according to any of the preceding claims 10-13, wherein the kite comprises energy storage (8), such as a battery.

15. A system according to claim 14, wherein the thrust component(s) comprising propeller(s) (3) and/or RAT(s) (4) connected to an onboard generator (9) for producing energy to the energy storage or transferring it through the conductive tether (6).

16. A system according to claim 15, wherein the propeller(s) (3) and RAT(s) is able to produce positive trust for counter acting the negative effects of gravitational forces using the energy stored in the energy storage (8) based on input from the controller (7).

17. A system according to any of the preceding claims 10-16, wherein the aircraft further comprises a de-icing system, the de-icing system is powered by the energy stored in the energy storage.

18. A system according to any of the preceding claims 10-17, the thrust component(s) comprising control surface(s) adapted to change the angle of attack of a main wing of the aircraft relative to the wind at the kite, or by changing the shape of the wing profile changes to generate a positive or negative lift effect.

19. A system according to any of the preceding claims 10-18, wherein the controller calculates a nominal flight path (10), the nominal flight path being calculated based upon one or more of the following features:

• the path in space,
• the speed of the kite along the path,
• the negative thrust applied for power harvesting,
• the speed of winch reeling and/or
• the lift coefficient of the kite.

20. A system according to claim 19, wherein the controller reduces or increase the nominal flight path (10) to respectively lower or increase the lift requirements of the aircraft (2).

21. A system according to claim 20, wherein the reduce or increase of the nominal flight path comprises reducing a radius in a flight path and/or changing the flight path from a curved path to a straight path.

22. A system according to any of claims 10-21, wherein the controller (7) reduces a general elevation angle of the nominal path above the horizon ground to lower the lift requirement of the aircraft.

Fig. 1

Fig. 2

Fig. 3

RAT (negative thrust)

Propeller (positive thrust)

# Fig. 4

Propeller motor/generator (positive and negative thrust)

# Fig. 5

Positive thrust
applied moving
upwards

Aircraft at a second
point in time

Aircraft at a first
point in time

Negative thrust
applied moving
downwards

## Fig. 6

Aircraft at a second
point in time

No thrust applied
during upwards
movement

Negative thrust applied
during downwards
movement

Aircraft at a first
point in time

## Fig. 7

Thrust = nominal path
thrust

Thrust > nominal path
thrust

Thrust <
nominal path
thrust

Aircraft shown
at four separate
points in time

Thrust = nominal path
thrust

## Fig. 8

Thrust = nominal path
thrust

Thrust < nominal path
thrust

Thrust > nominal
path thrust

Thrust >
nominal
path thrust

Thrust <
nominal path
thrust

Thrust < nominal path
thrust

Thrust = nominal path
thrust

## Fig. 9

Thrust > nominal path thrust

Thrust < nominal path thrust

Thrust > nominal path thrust

Thrust < nominal path thrust

Thrust > nominal path thrust

Thrust < nominal path thrust

Fig. 10

Motor/ Generator

Motor electronics

Propeller

Inertial navigation system

Computer

Power control electronics

Capacitor

Fig. 11

Europäisches
Patentamt

European
Patent Office

Office européen
des brevets

## EUROPEAN SEARCH REPORT

Application Number

EP 21 16 6918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 987 987 A (PAYNE PETER R ET AL) 26 October 1976 (1976-10-26) * column 3, lines 54-68 * * column 5, line 67 - column 6, line 9 * * figures 1,1a,1b * ----- | 1,6,8 | INV. F03D9/11 B64C39/02 F03D9/32 |
| X | EP 3 334 928 A1 (KITEMILL AS [NO]) 20 June 2018 (2018-06-20) * paragraphs [0063], [0064], [0070], [0071], [0091], [0103], [0106], [0118] * * figure 1A * ----- | 10,13-22 | |
| X | US 2015/097086 A1 (SCHAEFER DAVID BRIAN [US]) 9 April 2015 (2015-04-09) * paragraphs [0034], [0044], [0046], [0047], [0050], [0051], [0053], [0056], [0068], [0071], [0077], [0078] * ----- | 10-16, 19,20 | |
| X | US 2020/208607 A1 (FELKER FORT [US] ET AL) 2 July 2020 (2020-07-02) * paragraphs [0030], [0025], [0032], [0033], [0038], [0041], [0055], [0060], [0093], [0126], [0136], [0161] * * figure 1 * ----- | 1-6,8 | TECHNICAL FIELDS SEARCHED (IPC) F03D B64C |

The present search report has been drawn up for all claims

| Place of search | Date of completion of the search | Examiner |
|---|---|---|
| The Hague | 21 January 2022 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 6918

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2022

| Patent document cited in search report | | Publication date | Patent family member(s) | | Publication date |
|---|---|---|---|---|---|
| US 3987987 | A | 26-10-1976 | NONE | | |
| EP 3334928 | A1 | 20-06-2018 | DK | 3334928 T3 | 02-11-2020 |
| | | | EP | 3334928 A1 | 20-06-2018 |
| | | | ES | 2828029 T3 | 25-05-2021 |
| | | | WO | 2017029231 A1 | 23-02-2017 |
| US 2015097086 | A1 | 09-04-2015 | NONE | | |
| US 2020208607 | A1 | 02-07-2020 | US | 2020208607 A1 | 02-07-2020 |
| | | | WO | 2020139444 A1 | 02-07-2020 |

EPO FORM P0459

For more details about this annex : see Official Journal of the European Patent Office, No. 12/82